# EUROPÄISCHE PATENTANMELDUNG

(11) **EP 4 748 228 A1**
(43) Veröffentlichungstag der Anmeldung: **27.05.2026**
(21) Anmeldenummer: 25195170.3
(22) Anmeldetag: 11.08.2025
(51) Int. Cl.: A01M 7/00, A01M 9/00, A01B 73/06

(54) **GEZOGENE VERTEILMASCHINE**

(30) Priorität: 21.08.2024 DE 102024123815
(71) Anmelder: Amazonen-Werke H. Dreyer SE & Co. KG, 49205 Hasbergen (DE)
(72) Erfinder: Kowollik, Daniel, 49205 Hasbergen-Gaste (DE)
(74) Vertreter: Heisel, Per-Christian

(57) **Zusammenfassung**

Die Erfindung betrifft eine gezogene Verteilmaschine, insbesondere Feldspritze, zum Verteilen von Verteilgut auf einer landwirtschaftlichen Nutzfläche (N), mit einem Verteilgestänge (2), welches über einen Gelenkarm (4) gegenüber einem fahrbaren Maschinenrahmen (3) bewegbar ist, wobei der Gelenkarm (4) über einen ersten Drehpunkt (5) drehbar am Maschinenrahmen (3) und über einen zweiten Drehpunkt (6) drehbar am Verteilgestänge (2) angeordnet ist, wobei der Gelenkarm (4) über ein zwischen den beiden Drehpunkten (5, 6) angeordnetes Faltgelenk (7) faltbar ist.

## Beschreibung

Die Erfindung betrifft eine gezogene Verteilmaschine, insbesondere Feldspritze, zum Verteilen von Verteilgut auf einer landwirtschaftlichen Nutzfläche, mit einem Verteilgestänge, welches über einen Gelenkarm gegenüber einem fahrbaren Maschinenrahmen bewegbar ist, wobei der Gelenkarm über einen ersten Drehpunkt drehbar am Maschinenrahmen und über einen zweiten Drehpunkt drehbar am Verteilgestänge angeordnet ist.

Gezogene Verteilmaschinen, wie etwa Feldspritzen oder pneumatische Düngerstreuer, kommen in der Landwirtschaft, insbesondere im Pflanzenbau oder der Weidewirtschaft, zum Verteilen von Verteilgut auf Nutzflächen zum Einsatz. Bei dem Verteilgut kann es sich um sprüh- oder streufähiges Verteilgut handeln, insbesondere um flüssiges oder granulares Verteilgut. Hierzu zählen in erster Linie Spritzmittel, etwa Pflanzenschutzmittel, Unkrautbekämpfungsmittel oder Flüssigdünger, welche zum Pflanzenschutz oder zur Wachstumsförderung der auf den Nutzflächen angebauten Nutzpflanzen verteilt werden. Ferner zählen dazu auch Streumittel, welche zur Beeinflussung von Bodeneigenschaften, insbesondere der Nährstoffversorgung, dienen.

Gezogene Verteilmaschinen sind zum Ausbringen des Verteilguts in der Regel an eine landwirtschaftliche Zugmaschine, beispielsweise einen Ackerschlepper, angehängt. Zu diesem Zweck weisen die Verteilmaschinen oftmals einen Maschinenrahmen auf, an welchem mehrere Laufräder angeordnet sind. Die Zugmaschine zieht die Verteilmaschine bahnenförmig zum Verteilen des Verteilguts typischerweise entlang einer Fahrtrichtung über die Nutzfläche, wobei die Laufräder über den Boden der Nutzfläche abrollen. Das Verteilgut wird dabei in der Regel gleichmäßig oder anderweitig bedarfsgerecht auf der Nutzfläche verteilt.

Zum Verteilen des Verteilguts ist an dem Maschinenrahmen in der Regel ein Verteilgestänge vorgesehen. An dem Verteilgestänge sind häufig mehrere Verteilorgane, beispielsweise Düsen, Schleppschläuche oder Prallelemente, angeordnet, über welche das Verteilgut beim Überfahren auf der Nutzfläche verteilt werden kann. Das Verteilgestänge ist in herkömmlicherweise derart ausgebildet und angeordnet, dass bei dem Verteilen des Verteilguts eine Breite der Verteilmaschine und/oder der Zugmaschine quer zur Fahrtrichtung teilweise erheblich überschritten wird. Mit einer einzigen Überfahrt können somit größere Bereiche der Nutzfläche und entsprechend mehr Nutzpflanzen gleichzeitig mit dem Verteilgut versorgt werden. Der Abstand zwischen den Fahrgassen der Nutzfläche kann bei weit auskragenden Verteilgestängen entsprechend groß sein, weshalb weniger Fahrgassen pro Nutzfläche benötigt werden.

Bei Verteilmaschinen des Stands der Technik sind oftmals ein oder mehrere Gelenkarme vorgesehen, welche das Verteilgestänge mit dem Maschinenrahmen verbinden. Über die Gelenkarme lässt sich das Verteilgestänge oftmals in vertikaler Richtung verstellen, um den Abstand zwischen Verteilgestänge und Nutzfläche anzupassen.

In diesem Zusammenhang ist es im Stand der Technik bekannt, dass der Gelenkarm zur Höhenverstellung des Verteilgestänges über einen ersten Drehpunkt drehbar am Maschinenrahmen angeordnet ist. Eine Rotation des Gelenkarms um den ersten Drehpunkt erlaubt eine Verstellung der vertikalen Position des Verteilgestänges. Das Verteilgestänge bewegt sich dabei auf einer Umlaufbahn um den ersten Drehpunkt.

Zudem ist es beispielsweise aus der EP 3 437 470 A1 bekannt, das Verteilgestänge über einen zweiten Drehpunkt an dem Gelenkarm anzuordnen. Hierdurch kann eine Rotation des Verteilgestänges um eine Rotationsachse ermöglicht werden, etwa um einen zwischen Verteilgestänge und Nutzfläche bestehenden Winkel zu ändern. Ferner lässt sich durch eine solche Ausgestaltung eine vertikale Ausrichtung des Verteilgestänges unabhängig von der vertikalen Position beibehalten.

Auch wenn sich solche Verteilmaschinen grundsätzlich bewährt haben, besteht in der landwirtschaftlichen Praxis das Problem, dass insbesondere bei weit auskragenden Gelenkarmen mit einer Verstellung der vertikalen Position aufgrund der Rotation um den ersten Drehpunkt konstruktionsbedingt eine Veränderung des Abstands zwischen Verteilgestänge und Maschinenrahmen eintritt. Hiermit geht auch eine unerwünschte Änderung der Lastenverteilung, insbesondere der Stützlast, einher, welche aufgrund der Masse und insbesondere der großen Spannweite des Verteilgestänges in der Verteilstellung nicht unerheblich sein kann. Die veränderte Lastenverteilung, insbesondere der Stützlasten, können vor allem auf unebenen Nutzflächen unter Umständen zu Schwingungen führen, welche den Verteilvorgang stören und den Verschleiß der Verteilmaschine erhöhen können.

Vor diesem Hintergrund stellt sich die Erfindung die **Aufgabe**, eine Verteilmaschine anzugeben, bei welcher eine Änderung der Lastenverteilung, insbesondere der Stützlast, bei einer Verstellung der vertikalen Position des Verteilgestänges vermieden werden kann.

Diese Aufgabe wird bei einer Verteilmaschine der eingangs genannten Art durch die Merkmale des Anspruchs 1 **gelöst**. Vorteilhafte Weiterbildungen sind in den abhängigen Unteransprüchen angeben.

Dadurch, dass der Gelenkarm über ein zwischen den beiden Drehpunkten angeordnetes Faltgelenk faltbar ist, kann der Abstand zwischen Maschinenrahmen und Verteilgestänge unabhängig von der vertikalen Höhe des Verteilgestänges eingestellt werden. Dies erlaubt eine zumindest nahezu gleichbleibende Lastenverteilung, insbesondere Stützlast, und kann somit dazu beitragen, unerwünschte Schwingungen und/oder übermäßigen Verschleiß zu vermeiden.

In diesem Zusammenhang hat es sich als vorteilhaft erwiesen, wenn eine Arbeitshöhe des Verteilgestänges über den Gelenkarm einstellbar ist. Als Arbeitshöhe wird in diesem Zusammenhang die Höhe des Verteilgestänges über dem Boden der Nutzfläche in dessen Verteilstellung bezeichnet. Eine Einstellung der Arbeitshöhe erlaubt eine bedarfsgerechte Verteilung des Verteilguts, welche insbesondere auf die Wuchshöhe des Pflanzenbestands auf der Nutzfläche und/oder auf Unebenheiten des Bodens angepasst sein kann. Bei einer größeren Wuchshöhe der Pflanzen, etwa in einem gewachsenen Pflanzenbestand, oder bei größeren Unebenheiten kann das Verteilgestänge auf eine große Arbeitshöhe eingestellt werden, um Beschädigungen der Pflanzen, des Bodens und/oder des Verteilgestänges bei der Überfahrt mit der Verteilmaschine zu vermeiden. Bei einer geringen Wuchshöhe der Pflanzen, etwa direkt nach deren Aussaat oder Anpflanzung, oder bei geringen Unebenheiten kann das Verteilgestänge auf eine niedrige Arbeitshöhe eingestellt werden, um die Pflanzen und/oder den Boden zielgerichtet und bedarfsgerecht mit dem Verteilgut zu versorgen. Eine möglichst niedrige Arbeitshöhe kann insbesondere dann bevorzugt sein, wenn ein vorherrschender Wind die Verteilung des Verteilguts beeinträchtigen könnte, da Windeinflüsse sich in diesem Fall in der Regel weniger stark auswirken. Die Arbeitshöhe kann insbesondere durch eine Faltbewegung des Gelenkarms über das Faltgelenk einstellbar sein.

In einer vorteilhaften Weiterbildung der Erfindung wird vorgeschlagen, dass eine Ausrichtung des Verteilgestänges relativ zum Maschinenrahmen, insbesondere eine Ausrichtung in vertikaler Richtung, unabhängig von der eingestellten Arbeitshöhe ist. Eine solche Ausgestaltung erlaubt eine einfache und bedienerfreundliche Einstellung der Arbeitshöhe, ohne dass eine Korrektur oder Anpassung der Ausrichtung des Verteilgestänges relativ zum Maschinenrahmen erforderlich wäre. Dies kann sich beispielsweise bei einer kontinuierlichen Anpassung oder Regelung der Arbeitshöhe, etwa auf unebenen Nutzflächen, als besonders vorteilhaft herausstellen.

Eine weitere bevorzugte Ausführungsform sieht vor, dass ein Arbeitsabstand des Verteilgestänges relativ zum Maschinenrahmen über den Gelenkarm einstellbar ist. Als Arbeitsabstand wird in diesem Zusammenhang ein horizontaler Abstand zwischen dem Maschinenrahmen und dem Verteilgestänge in Fahrtrichtung angesehen. Über die Einstellung des Arbeitsabstand lässt sich insbesondere die durch das Verteilgestänge auf den Maschinenrahmen wirkende Stützlast auf vorteilhafte Art und Weise anpassen. Je geringer der Arbeitsabstand, desto kleiner ist ein wirksamer Hebelarm und desto geringer sind die auf den Maschinenrahmen wirkenden Drehmomente, weshalb in der Regel ein geringer Arbeitsabstand erwünscht ist. Es kann jedoch, etwa zur Vermeidung von Kollisionen zwischen Verteilgestänge und Maschinenrahmen oder sonstigen Komponenten der Verteilmaschine auch bevorzugt sein, wenn ein möglichst großer Arbeitsabstand eingestellt wird. Der Arbeitsabstand kann insbesondere durch eine Faltbewegung des Gelenkarms über das Faltgelenk einstellbar sein.

Des Weiteren wird in diesem Zusammenhang vorgeschlagen, dass eine Ausrichtung des Verteilgestänges relativ zum Maschinenrahmen, insbesondere eine Ausrichtung in vertikaler Richtung, unabhängig von dem eingestellten Arbeitsabstand ist. Eine solche Ausgestaltung erlaubt eine Verstellung des Arbeitsabstands, ohne dass die Ausrichtung des Verteilgestänges verändert wird. Somit kann auf bedienerfreundliche Art und Weise eine einfache Anpassung der Stützlast, auch während des Verteilvorgangs, vorgenommen werden.

Es hat sich überdies als vorteilhaft erwiesen, wenn das Verteilgestänge über den Gelenkarm zwischen einer eingeklappten Transportstellung und einer ausgeklappten Verteilstellung klappbar ist. Eine solche Ausgestaltung ermöglicht eine bedienerfreundliche Überführung des Verteilgestänges von der eingeklappten Transportstellung in die ausgeklappte Verteilstellung und umgekehrt. Die eingeklappte Transportstellung kann sich insbesondere durch eine kompakte und platzsparende, wenig raumgreifende Anordnung des Verteilgestänges auszeichnen. Insbesondere kann die eingeklappte Transportstellung die Einhaltung von rechtlichen Rahmenbedingungen betreffend Höchstmaße von Fahrzeugen und Fahrzeuggespannen, die am Straßenverkehr teilnehmen, ermöglichen. In der ausgeklappten Verteilstellung kann sich das Verteilgestänge quer zur Fahrtrichtung erstrecken. In der ausgeklappten Verteilstellung kann das Verteilgestänge derart flügelartig quer zur Fahrtrichtung aufgespannt sein, dass die Breite des Maschinenrahmens und/oder der Zugmaschine um ein Vielfaches überschritten wird. Bevorzugt erstreckt sich das Verteilgestänge dabei symmetrisch zu beiden Seiten der Verteilmaschine quer zur Fahrtrichtung. Es ist jedoch auch denkbar, dass sich das Verteilgestänge asymmetrisch zu beiden Seiten der Verteilmaschine erstreckt.

Bevorzugt ist eine Ausgestaltung, in welcher das Verteilgestänge zwischen der eingeklappten Transportstellung und der ausgeklappten Verteilstellung um den zweiten Drehpunkt verschwenkbar angeordnet ist. Insbesondere kann das Verteilgestänge um eine Achse verschwenkbar sein, welche quer zu einer durch den Drehpunkt verlaufenden Drehachse verläuft.

Es ist in diesem Zusammenhang bevorzugt, wenn das Verteilgestänge gegeneinander verschwenkbare Verteilsegmente aufweist. Bei einer derartigen Ausgestaltung lässt sich das Verteilgestänge auf besonders platzsparende Art und Weise in die Transportstellung bringen, indem die Verteilsegmente relativ zueinander verschwenkt oder geklappt werden.

Zur Einhaltung einer Maximalhöhe der Verteilmaschine ist es vorteilhaft, wenn eine Transporthöhe des Verteilgestänges in dessen Transportstellung über den Gelenkarm einstellbar ist. Auf diese Weise kann auch auf unterschiedliche zulässige Maximalhöhen der Verteilmaschine reagiert werden, welche beispielsweise aus einer erforderlichen Unterquerung von Hindernissen oder die Durchfahrt von Unterführungen resultieren können. Des Weiteren kann eine Schwerpunktlage der Verteilmaschine auf diese Weise verstellt werden, etwa um eine günstige Straßenlage zu erreichen. Überdies kann das Verteilgestänge in dessen Transportstellung über den Gelenkarm angehoben werden, so dass beispielsweise Komponenten oder Bauteile der Verteilmaschine, wie beispielsweise in Vorratsbehälter zur Bevorratung des Verteilguts, in der Transportstellung zwischen dem Maschinenrahmen und dem Verteilgestänge angeordnet werden können.

Ferner wird vorgeschlagen, dass ein Arbeitswinkel des Verteilgestänges, insbesondere in dessen Verteilstellung, über den Gelenkarm einstellbar ist. Der Arbeitswinkel ist definiert als Winkel, welcher zwischen dem Verteilgestänge und der Vertikalen aufgespannt wird. In einer horizontalen Ausrichtung des Verteilgestänges beträgt der Arbeitswinkel im Wesentlichen 90 Grad. Es kann jedoch in Abhängigkeit des Verteilguts, der Nutzfläche und/oder Umgebungsbedingungen von Vorteil sein, einen von 90 Grad abweichenden Arbeitswinkel einzustellen. Die Einstellung des Arbeitswinkels kann bevorzugt durch Drehung des Verteilgestänges um den zweiten Drehpunkt erfolgen.

In einer weiteren vorteilhaften Ausgestaltung ist der Gelenkarm mittels eines Faltelements über das Faltgelenk faltbar. Das Faltelement kann eine einfache und bedienerfreundliche, wiederholgenaue Ausführung der Faltbewegung erlauben. Insbesondere kann das Faltelement eine stufenweise oder stufenlose Faltbewegung über das Faltgelenk ermöglichen.

In diesem Zusammenhang hat es sich als besonders vorteilhaft erwiesen, wenn das Faltelement längenveränderlich ist, wobei eine Verkürzung des Faltelements ein Falten des Gelenkarms und eine Verlängerung des Faltelements ein Strecken des Gelenkarms bewirkt. Eine solche Ausgestaltung des Faltelements kann schnelle und präzise Faltbewegungen des Gelenkarms ermöglichen. Bevorzugt ist das Faltelement teleskopierbar ausgebildet.

Es wird ferner vorgeschlagen, dass das Verteilgestänge mittels eines Ausrichtelements um den zweiten Drehpunkt drehbar ist. Eine solche Ausgestaltung erlaubt bedienerfreundlich schnelle und wiederholgenaue Drehbewegungen des Verteilgestänges um den zweiten Drehpunkt. Hierdurch lässt sich etwa der Arbeitswinkel zuverlässig einstellen. Insbesondere kann das Ausrichtelement derart angeordnet und ausgebildet sein, dass eine Verkürzung des Ausrichtelements zu einer Drehung des Verteilgestänges in eine Drehrichtung und eine Verlängerung des Ausrichtelements zu einer Drehung des Verteilgestänges in eine entgegengesetzte Drehrichtung führt.

Es hat sich als besonders bevorzugt erwiesen, wenn das Faltelement und/oder das Ausrichtelement als Stellzylinder, insbesondere als Hydraulikzylinder ausgebildet sind. Eine solche Ausgestaltung hat sich insbesondere unter den oftmals widrigen Umgebungsbedingungen beim Verteilen von Verteilgut auf landwirtschaftlichen Nutzflächen als robust und störungsunanfällig erwiesen. Das als Hydraulikzylinder ausgebildeten Faltelement und/oder das als Hydraulikzylinder ausgebildete Ausrichtelement können in eine Hydraulikversorgung der Verteilmaschine und/oder der Zugmaschine eingebunden sein. Ferner kann das als Stellzylinder ausgebildete Faltelement und/oder das als Stellzylinder ausgebildete in eine Steuerung der Verteilmaschine und/oder der Zugmaschine eingebunden sein. Alternativ oder zusätzlich zu einer Ausgestaltung als Hydraulikzylinder kann das Faltelement und/oder das Ausrichtelement auch als anderweitiger Stellzylinder, etwa als pneumatischer oder elektrischer Stellzylinder oder als auf einem Spindeltrieb beruhender Stellzylinder ausgebildet sein, wenn sich dies im jeweiligen Anwendungsfall als vorteilhaft herausstellen sollte.

Alternativ können das Faltelement und/oder das Ausrichtelement als Drehmotor oder ähnliche Antriebselemente ausgebildet sein, welche Faltbewegungen des Gelenkarms um das Faltgelenk und/oder Drehbewegungen des Verteilgestänges um den zweiten Drehpunkt ermöglichen.

Aus konstruktiver Sicht ist es in diesem Zusammenhang bevorzugt, wenn das Faltelement und das Ausrichtelement auf unterschiedlichen, insbesondere gegenüberliegenden Seiten des Gelenkarms angeordnet sind. Eine solche Anordnung erlaubt sowohl dem Faltelement als auch dem Ausrichtelement eine vorteilhaft große Bewegungsfreiheit. Zudem sind das Faltelement und das Ausrichtelement in einer solchen Anordnung auf wartungsfreundliche Weise gut zugänglich. Alternativ können das Faltelement und das Ausrichtelement auch auf der gleichen Seite des Gelenkarms angeordnet sein, beispielsweise um diese einfach mit notwendigen Medien, etwa Hydraulikflüssigkeit, Strom oder Steuersignalen, versorgen zu können.

Eine konstruktiv vorteilhafte Ausgestaltung sieht vor, dass das Faltelement an einer Unterseite und das Ausrichtelement an einer Oberseite des Gelenkarms angeordnet sind. Es resultiert eine gute Zugänglichkeit von der Unterseite und/oder der Oberseite des Gelenkarms, etwa zu Wartungs- oder Reparaturzwecken. Wenn das Faltelement an einer Unterseite des Gelenkarms angeordnet ist, kann eine Verkürzung des Faltelements auf kinematisch einfache Art und Weise ein Zusammenfalten des Gelenkarms ermöglichen. Eine Verlängerung des an einer Unterseite des Gelenkarms angeordneten Faltelements ermöglicht ein kinematisch simples Entfalten des Gelenkarms. Es ist in diesem Zusammenhang jedoch auch denkbar, dass das Faltelement an einer Oberseite und das Ausrichtelement an einer Unterseite des Gelenkarms angeordnet ist oder dass das Faltelement und das Ausrichtelement beide an einer Oberseite oder einer Unterseite des Gelenkarms angeordnet sind.

Es hat sich des Weiteren als vorteilhaft herausgestellt, wenn sich eine Faltachse des Faltgelenks im Wesentlichen in horizontaler Richtung, insbesondere quer zu einer Fahrtrichtung erstreckt. Eine solche Ausgestaltung erlaubt präzise und kinematisch einfache Faltbewegungen des Gelenkarms. Insbesondere kann der Arbeitsabstand bei einer solchen Ausgestaltung auf einfache und zeitsparende Art und Weise durch Falten des Gelenkarms um die Faltachse des Faltgelenks eingestellt werden.

In diesem Zusammenhang wird vorgeschlagen, dass sich der Gelenkarm im Wesentlichen in Fahrtrichtung erstreckt. Faltbewegungen des Gelenkarms erlauben bei einer solchen Ausrichtung eine wiederholgenaue und schnelle Einstellung des Arbeitsabstands des Verteilgestänges. Ferner kann das Verstellen des Verteilgestänges zwischen der ausgeklappten Verteilstellung und der eingeklappten Transportstellung bei einer solchen Ausrichtung des Gelenkarms auf zeitsparende Art und Weise erfolgen. Bevorzugterweise erstreckt sich der Gelenkarm in einer Transportstellung des Verteilgestänges winklig zur Nutzfläche, wobei der erste Drehpunkt näher an der Nutzfläche angeordnet ist als der zweite Drehpunkt. Je nach Ausgestaltung der Verteilmaschine kann jedoch auch eine Ausrichtung des Gelenkarms von Vorteil sein, in welcher sich dieser schräg oder quer zur Fahrtrichtung erstreckt.

In Bezug auf den Gelenkarm wird vorgeschlagen, dass dieser mindestens zwei über das Faltgelenk relativ zueinander faltbare Segmente aufweist. Eine solche Ausgestaltung erlaubt dem Gelenkarm wiederholgenaue und kinematisch einfache Faltbewegungen. Dabei kann es bevorzugt sein, wenn die mindestens zwei Segmente gleich groß sind, insbesondere die gleiche axiale Länge aufweisen. Es kann sich jedoch ebenso als vorteilhaft erweisen, wenn die mindestens zwei Segmente unterschiedlich groß sind, insbesondere unterschiedliche axiale Längen aufweisen. Über die Ausgestaltung und die Anzahl der Segmente können die erzielbaren Faltbewegungen und hierüber die erzielbaren Bewegungen des Verteilgestänges relativ zum Maschinenrahmen vordefiniert werden.

In einer Weiterbildung der Erfindung wird vorgeschlagen, dass die Segmente in einem über das Faltelement einstellbaren Faltwinkel relativ zueinander angeordnet sind, wobei der Faltwinkel insbesondere zwischen 10 und 180 Grad beträgt. Über die Einstellung des Faltwinkels lässt sich, in Kombination mit der Drehstellung des Gelenkarms, insbesondere der Arbeitsabstand des Verteilgestänges zuverlässig einstellen. In der Regel liegt bei vorgegebener Arbeitshöhe bei einem kleineren Faltwinkel, insbesondere bei einem Faltwinkel kleiner 90 Grad, ein kleinerer Arbeitsabstand vor als bei einem größeren Faltwinkel. Ferner kann über die Einstellung des Faltwinkels, in Kombination mit der Drehstellung des Gelenkarms, auch die Arbeitshöhe des Verteilgestänges bei gegebenem Arbeitsabstand eingestellt werden. In der Regel wird ein größerer Faltwinkel zur Einstellung einer größeren Arbeitshöhe genutzt. Ferner kann über die Einstellung des Faltwinkels die Umstellung zwischen Verteilstellung und Transportstellung unterstützt werden. In der Transportstellung liegen bevorzugt Faltwinkel nahe 180 Grad vor.

Eine weitere vorteilhafte Weiterbildung der Erfindung sieht vor, dass der Gelenkarm zwischen dem Faltgelenk und mindestens einem der Drehpunkte längenveränderlich, insbesondere teleskopierbar, ist. Hierdurch kann ein weiterer Freiheitsgrad bei der Einstellung von Arbeitshöhe oder Arbeitsabstand eingeführt werden, welcher die Flexibilität der Verteilmaschine erhöht. Eine solche Ausgestaltung kann sich als besonders günstig für eine Einstellung einer bedarfsgerechten Transportstellung des Verteilgestänges, insbesondere bei in deren Verteilstellung sehr weit auskragenden Verteilgestängen, erweisen. Bevorzugt ist in diesem Zusammenhang, wenn mindestens eines der Segmente längenveränderlich ist. Es können zur Erhöhung der Flexibilität jedoch auch alle Segmente längenveränderlich ausgebildet sein. Es kann von Vorteil sein, wenn die Längenveränderung des Gelenkarms und/oder dessen Segmenten mittels eine Stellelements, insbesondere eines hydraulischen, elektrischen oder pneumatischen Aktors eingestellt werden kann.

In einer besonders bedienerfreundliche Ausgestaltung wird ferner vorgeschlagen, dass der Gelenkarm über ein Stellelement um den ersten Drehpunkt drehbar ist. Das Stellelement kann beispielsweise als elektrisches, pneumatisches oder hydraulisches Stellelement ausgebildet sein. Bevorzugt ist das Stellelement automatisch oder manuell betätigbar. Bei einer automatischen Betätigung des Stellelements hat sich eine steuerungstechnische Einbindung in eine Maschinensteuerung der Verteilmaschine als vorteilhaft herausgestellt.

Eine weitere vorteilhafte Ausführungsform sieht vor, dass der Maschinenrahmen unabhängig von dem Verteilgestänge höhenverstellbar ist. Über eine Höhenverstellung des Maschinenrahmens lässt sich dieser in einer Höhe anordnen, in welcher der Pflanzenbestand bei der Überfahrt nicht oder nur in geringer Weise beeinträchtigt wird. Ferner kann über die Höhenverstellung des Maschinenrahmen eine Schwerpunktlage der Verteilmaschine beeinflusst werden, etwa zur Sicherstellung einer sicheren Straßenlage. Zudem wird mit der Höhenverstellung des Maschinenrahmens eine weitere Möglichkeit geschaffen, eine zulässige, etwa aus gesetzlichen Vorgaben resultierende Gesamthöhe der Verteilmaschine in der Transportstellung des Verteilgestänges einzuhalten.

In diesem Zusammenhang ist es von steuerungstechnischem Vorteil, wenn der Maschinenrahmen und das Verteilgestänge zur Einstellung der Gesamthöhe über eine gemeinsame Steuerung höhenverstellbar sind. Die Steuerung kann die Höhenverstellung des Maschinenrahmens und die Einstellung der Arbeitshöhe des Verteilgestänges über den Gelenkarm berücksichtigen. Hierdurch lässt sich die Einstellung der Gesamthöhe auf zeitsparende und bedienerfreundliche Weise ermöglichen.

Eine konstruktiv vorteilhafte Weiterbildung sieht in diesem Zusammenhang vor, dass der Maschinenrahmen gegenüber einem Laufrad höhenverstellbar, insbesondere teleskopierbar, ist. Die Höhenverstellung des Maschinenrahmens gegenüber dem Laufrad kann insbesondere über einen geeigneten Aktor oder ein geeignetes Stellelement erfolgen.

Darüber hinaus wird vorgeschlagen, dass eine Deichsel zur Anbindung an eine Zugmaschine gegenüber dem Maschinenrahmen höhenverstellbar ist. Auf diese Weise lässt sich die Verteilmaschine auf bedienerfreundliche Art und Weise an unterschiedliche Zugmaschinen anhängen oder ankuppeln. Ferner kann die Deichsel zur Anpassung der zwischen Verteilmaschine und Zugmaschine wirkenden Stützlast höhenverstellbar ausgebildet sein.

Eine konstruktiv vorteilhafte Ausgestaltung sieht dabei vor, dass die Deichsel zur Höhenverstellung schwenkbar an dem Maschinenrahmen angeordnet ist. Es resultiert ein kinematisch einfacher, zuverlässiger Aufbau. Die Deichsel kann insbesondere manuell und/oder mittels eines geeigneten Aktors schwenkbar an dem Maschinenrahmen angeordnet sein. Die Schwenkbewegungen der Deichsel können über die gemeinsame Steuerung der Verteilmaschine steuerbar sein.

Weitere Einzelheiten und Vorteile der erfindungsgemäßen gezogenen Verteilmaschine werden nachfolgend unter Zuhilfenahme der beigefügten Zeichnungen gemäß Fig. 1 bis 7d erläutert.

Darin zeigen, teilweise in schematisierter Ansicht:
- Fig. 1:: eine Seitenansicht einer gezogenen Verteilmaschine mit einem in ausgeklappter Verteilstellung angeordneten Verteilgestänge;
- Fig. 2: eine weitere Seitenansicht der Verteilmaschine gemäß Fig. 1 mit einem in anderer Ausbringhöhe angeordneten Verteilgestänge;
- Fig. 3:: eine Seitenansicht der Verteilmaschine gemäß Fig. 1 mit einem in eingeklappter Transportstellung angeordneten Verteilgestänge;
- Fig. 4: eine Seitenansicht einer weiteren gezogenen Verteilmaschine;
- Fig. 5 und 6: zwei ausschnittsweise, stark schematisierte Draufsichten unterschiedlicher gezogener Verteilmaschinen, und
- Fig. 7a bis d: vier stark schematisierte Draufsichten einer gezogenen Verteilmaschine mit einem in unterschiedlichen Stellungen angeordneten Verteilgestänge.

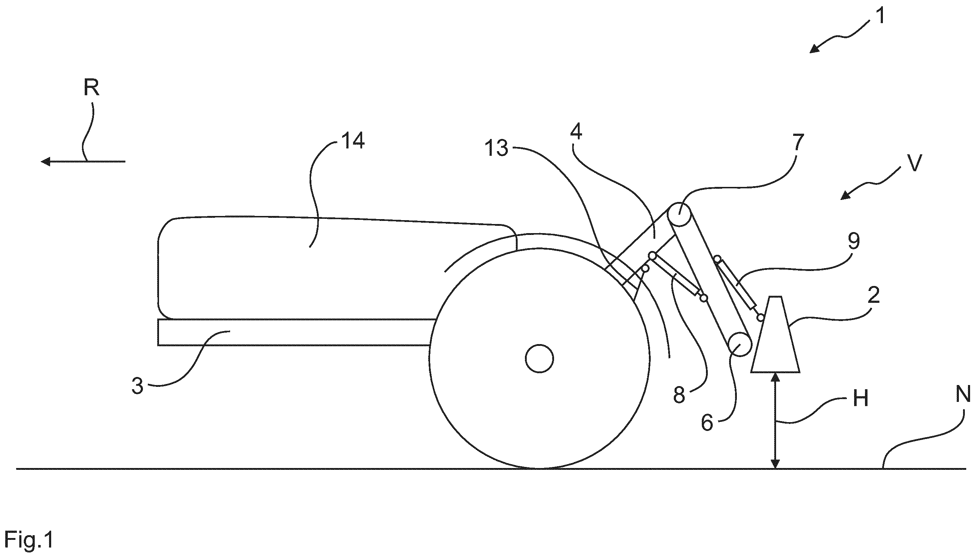

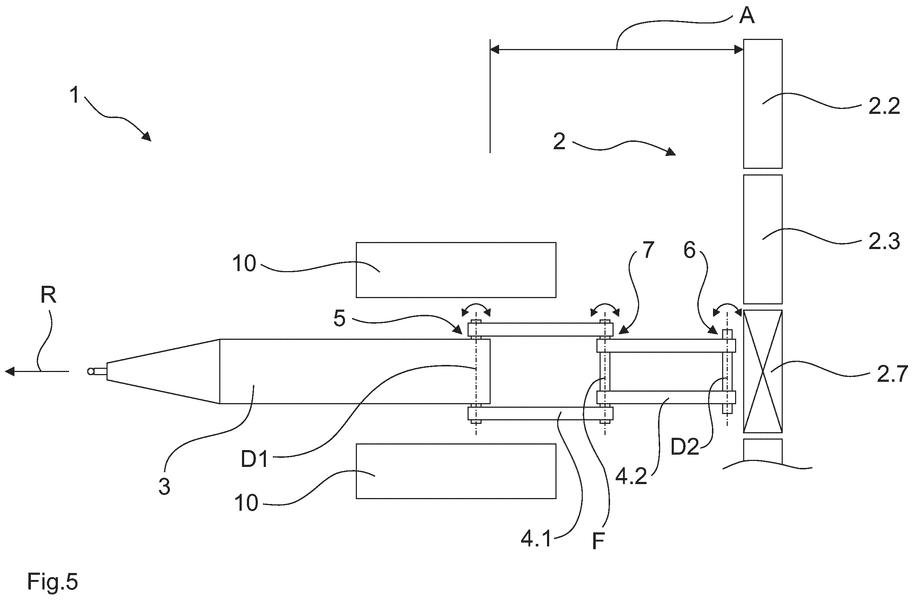

Die Darstellungen gemäß Fig. 1 bis 7d zeigen jeweils eine gezogene Verteilmaschine 1 zum Verteilen von Verteilgut auf landwirtschaftlichen Nutzflächen N in unterschiedlichen Ausführungsbeispielen. Bei der dargestellten Verteilmaschine 1 handelt es sich jeweils um eine Anhängefeldspritze, welche an eine in den Figuren nicht dargestellte Zugmaschine, insbesondere einen Traktor, angehängt werden kann. Zum Verteilen des Verteilguts wird die jeweilige Verteilmaschine 1 von der Zugmaschine entlang der Fahrtrichtung R über die Nutzfläche N gezogen, wobei gemäß der Darstellung in Fig. 5 zwei Laufräder 10 über dem Boden der Nutzfläche N abrollen. Die Laufräder 10 sind an einem Maschinenrahmen 3 angeordnet, welcher verschiedenste Komponenten und Bauteile der Verteilmaschine 1 trägt.

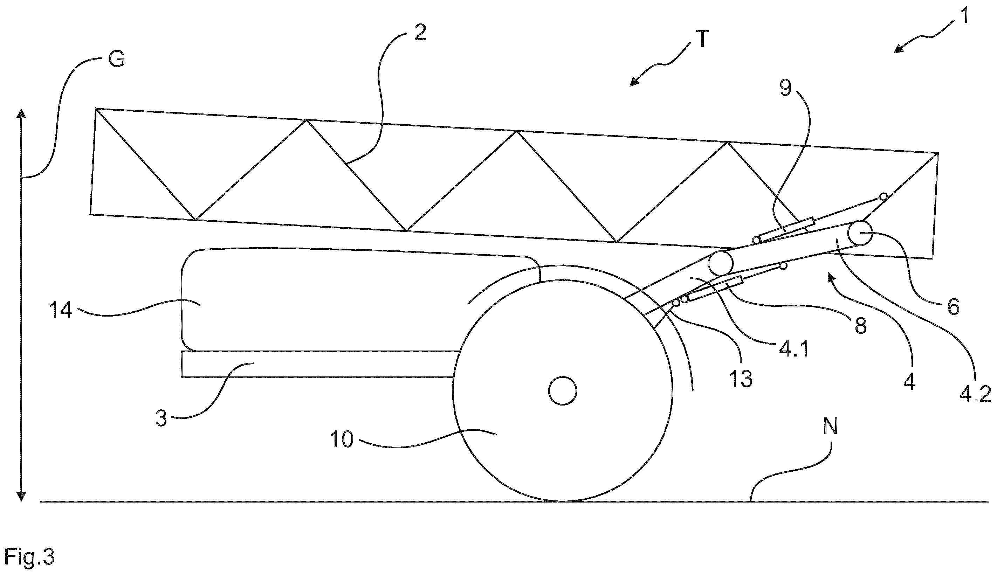

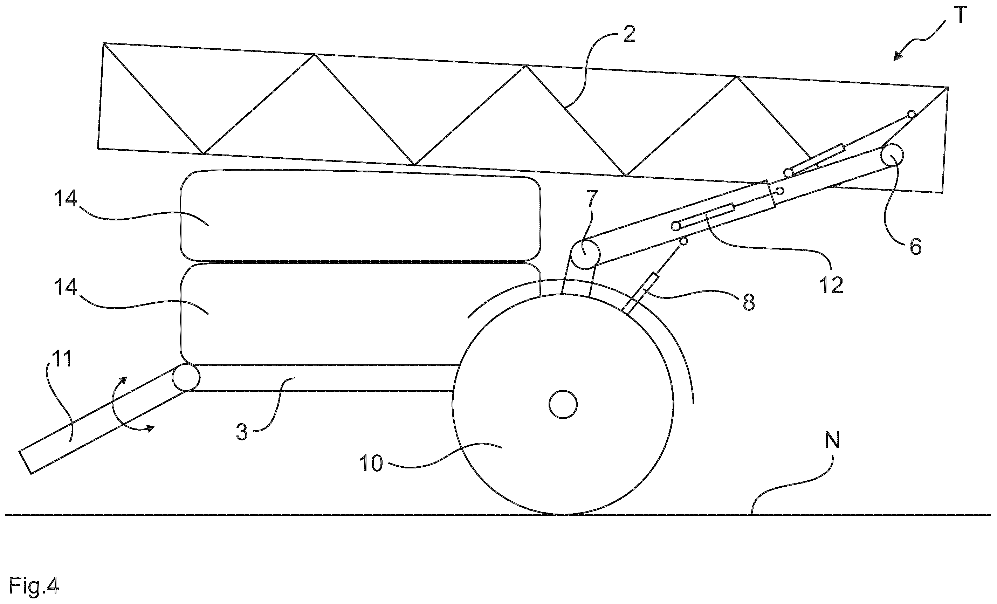

Über die Verteilmaschine 1 kann insbesondere flüssiges Verteilgut, beispielsweise Pflanzenschutzmittel oder Dünger, auf den Boden der Nutzfläche N und/oder auf den darauf angebauten Pflanzen, ausgebracht oder verteilt werde. Das Verteilgut ist in einem oder mehreren tankartigen Vorratsbehältern 14 der Verteilmaschine 1 bevorratet, vgl. Fig. 3 und 4. Von den Vorratsbehältern 14 wird das Verteilgut zu in den Figuren nicht dargestellten Verteilorganen geleitet, über welche das Verteilgut auf der Nutzfläche N und/oder auf den darauf angebauten Nutzpflanzen verteilt werden kann. Die Verteilorgane können insbesondere düsenartig oder nach Art von Schleppschläuchen ausgebildet sein.

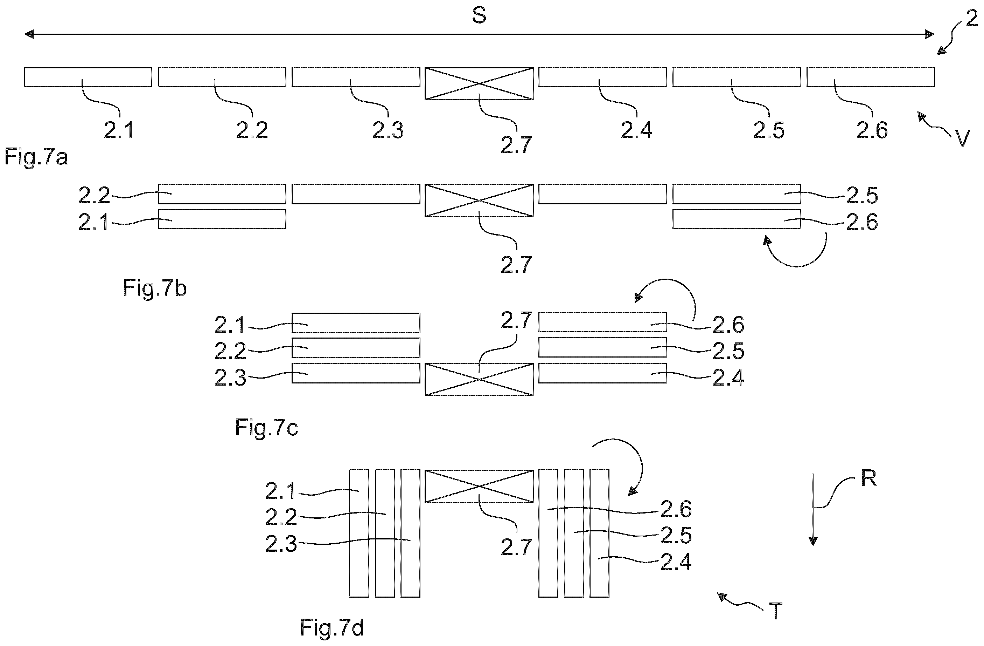

Die Verteilorgane sind an einem mit dem Maschinenrahmen 3 verbundenen Verteilgestänge 2 angeordnet. Das Verteilgestänge 2 erstreckt sich in einer Verteilstellung V beidseitig der Verteilmaschine 1 quer zur Fahrtrichtung R. Die Spannweite S des Verteilgestänges 2 in dessen Verteilstellung V überschreitet die Breite des Maschinenrahmens 3 der Verteilmaschine 1, vgl. Fig. 7a. Bei einer einzigen Überfahrt über die Nutzfläche N in Fahrtrichtung R kann das Verteilgut somit nicht nur in einem der Breite des Maschinenrahmens 3 entsprechenden Streifen, sondern in einem der gesamten Spannweite S entsprechenden Streifen verteilt werden. Die Verteilorgane sind in der Verteilstellung V des Verteilgestänges 2 derart angeordnet und ausgerichtet, dass das Verteilgut in Richtung der Nutzfläche N verteilt oder ausgebracht werden kann. Insbesondere sind die Verteilorgane in der Verteilstellung V an der Unterseite des Verteilgestänges 2 angeordnet und/oder in Richtung der Nutzfläche N orientiert.

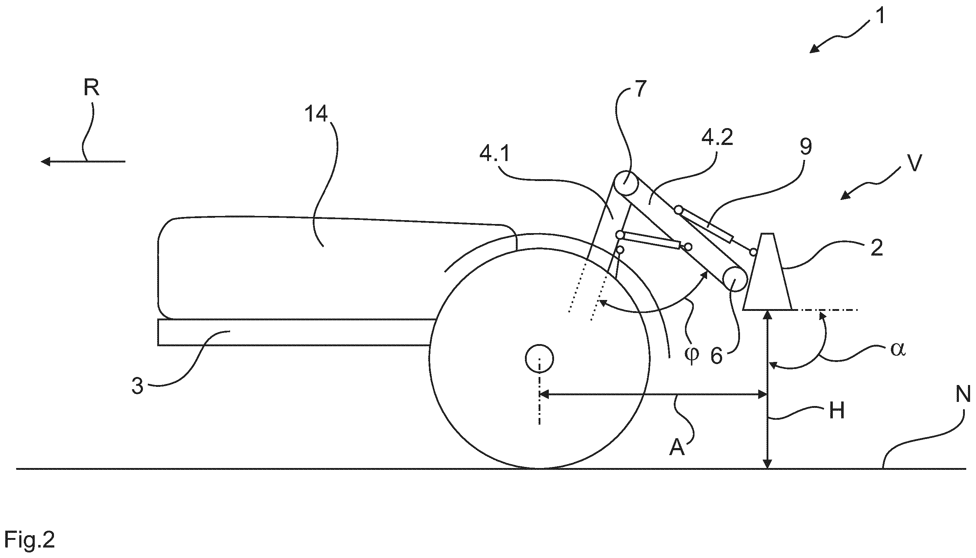

Das Verteilgestänge 2 ist segmentartig aufgebaut und weist mehrere gegeneinander klapp- oder schwenkbare Verteilsegmente 2.1 bis 2.7 auf, vgl. die Darstellung gemäß Fig. 7a. Wie dies in späteren Absätzen noch ausführlicher erläutert werden wird, ist das Verteilgestänge 2 zwischen der ausgeklappten Verteilstellung V gemäß Fig. 1 und 2 und einer eingeklappten Transportstellung T gemäß Fig. 3 klappbar. Der Darstellung gemäß Fig. 3 ist auch zu entnehmen, dass das Verteilgestänge 2 verschiedene, fachwerkartig miteinander verbundene Profile umfasst. Eine Querschnittsform des Verteilgestänges 2 kann dabei lastoptimiert ausgebildet und hierfür insbesondere trapezförmig gestaltet sein, wie in Fig. 1 und 2 dargestellt.

Das Verteilgestänge 2 ist über einen Gelenkarm 4 gegenüber dem Maschinenrahmen 3 bewegbar, was im Folgenden anhand der Darstellung gemäß Fig. 5 erläutert wird. Der Gelenkarm 4 ist an seinem dem Verteilgestänge 2 abgewandten Ende über einen ersten Drehpunkt 5 drehbar am Maschinenrahmen 3 angeordnet. Der erste Drehpunkt 5 befindet sich im Bereich eines rückseitigen Endes des Maschinenrahmens 3, zwischen zwei Laufrädern 10. Der erste Drehpunkt 5 kann in einer alternativen Ausführung jedoch auch an einer anderen Stelle des Maschinenrahmens 3 angeordnet sein, beispielsweise an einem mittleren Bereich des Maschinenrahmens 3. An seinem dem Verteilgestänge 2 zugewandten Ende ist der Gelenkarm 4 über den zweiten Drehpunkt 6 drehbar am Verteilgestänge 2 angeordnet.

Wie dies der Darstellung gemäß Fig. 5 ferner entnommen werden kann, erlaubt der erste Drehpunkt 5 dem Gelenkarm 4 eine Drehung um die Drehachse D1. Der zweite Drehpunkt 6 erlaubt dem Gelenkarm 4 eine Drehung um die Drehachse D2. Die Drehachsen D1, D2 erstrecken sich im Wesentlichen parallel zueinander quer zur Fahrtrichtung R. Die Drehachsen D1, D2 erstrecken sich im Wesentlichen in horizontaler Richtung. Es ist jedoch auch denkbar, dass sich die Drehachsen D1, D2 schräg zur Fahrtrichtung R und/oder schräg zur horizontalen Richtung erstrecken. Ferner kann es bevorzugt sein, wenn die beiden Drehachsen D1, D2 nicht parallel, sondern schräg zueinander verlaufen.

Über eine Drehung des Gelenkarms 4 um die erste Drehachse D1 kann dessen dem Verteilarm 2 zugewandtes Ende in vertikaler Richtung verstellt werden, vgl. die Darstellungen gemäß Fig. 1 und 2. Hierüber kann das Verteilgestänge 2 in dessen ausgeklappter Verteilstellung V in der Höhe verstellt werden. Die Höhe des Verteilgestänges 2 über der Nutzfläche N wird dabei als Arbeitshöhe H bezeichnet.

Die Darstellung gemäß Fig. 1 zeigt eine vergleichsweise niedrige Arbeitshöhe H des Verteilgestänges 2, welche etwa zum Ausbringen von Verteilgut auf niedrig gewachsene Nutzpflanzen oder auf eine unbewachsene Nutzfläche N genutzt wird. Hierdurch lässt sich das Verteilgut besonders zielgerichtet und/oder gleichmäßig verteilen, beispielsweise auf die Blätter der eine niedrige Wuchshöhe aufweisenden Nutzpflanzen. Zudem kann durch eine niedrige Arbeitshöhe H wegen des geringen Verteilwegs zwischen Verteilgestänge 2 und Nutzfläche N der Einfluss von Wind auf den Verteilvorgang minimiert werden, welcher insbesondere bei flüssigem Verteilgut erheblich sein kann.

Die Darstellung in Fig. 2 zeigt das Verteilgestänge 2 in einer vergleichsweise großen Arbeitshöhe H, welche beispielsweise zum Ausbringen von Verteilgut auf hochgewachsenen Nutzpflanzen genutzt werden kann, ohne dass die Nutzpflanzen bei der Überfahrt durch Kollisionen mit dem Verteilgestänge 2 beschädigt werden. Im Vergleich der Darstellungen gemäß Fig. 1 und 2 ist erkennbar, dass eine Verstellung der Arbeitshöhe H des Verteilgestänges 2 durch Rotation des Gelenkarms 4 um den ersten Drehpunkt 5 erfolgt. Um von der niedrigeren Arbeitshöhe H gemäß Fig. 1 zu der größeren Arbeitshöhe H gemäß Fig. 2 zu gelangen, wurde der Gelenkarm 4 entgegen dem Uhrzeigersinn um den ersten Drehpunkt 5 gedreht. Gemäß der Ansicht in Fig. 2 führt eine Drehbewegung entgegen dem Uhrzeigersinn zu einer Aufwärtsbewegung des Verteilgestänges 2. Entsprechend führt eine Rotation des Gelenkarms 4 im Uhrzeigersinn um den ersten Drehpunkt 5 zu einer Abwärtsbewegung des Verteilgestänges 2, wodurch eine niedrigere Arbeitshöhe H eingestellt werden kann.

Das Verteilgestänge 2 ist in seiner Verteilstellung V nicht nur bezüglich seiner Arbeitshöhe H verstellbar, sondern auch bezüglich einer Drehstellung um den zweiten Drehpunkt 6, vgl. hierzu ebenfalls die Darstellungen gemäß Fig. 1 und 2. Um bei der Verstellung der Arbeitshöhe H ein Verkippen des Verteilgestänges 2 zu vermeiden, kann das Verteilgestänge 2 um den zweiten Drehpunkt 6 gedreht werden. Im Vergleich der Darstellungen gemäß Fig. 2 und 3 erfolgt bei einer Aufwärtsbewegung des Verteilgestänges 2 zur Einstellung einer größeren Arbeitshöhe H eine Rotation des Verteilgestänges 2 im Uhrzeigersinn um den zweiten Drehpunkt 6. Hierdurch kann ein Verkippen des Verteilgestänges 2 bei der Höhenverstellung vermieden werden.

Die Ausrichtung des Verteilgestänges 2 in vertikaler Richtung ist unabhängig von der eingestellten Arbeitshöhe H einstellbar. Die Ausrichtung des Verteilgestänges 2 kann durch den Arbeitswinkel α beschrieben werden. Gemäß der Darstellung in Fig. 2 beträgt der Arbeitswinkel α in einer Neutralstellung üblicherweise im Wesentlichen 90 Grad, wodurch ein senkrechtes Verteilen des Verteilguts von den am Verteilgestänge 2 angeordneten Verteilorganen auf die Nutzfläche N und/oder die darauf angepflanzten Nutzpflanzen ermöglicht wird. Es ist jedoch ebenso denkbar, dass ein anderer Arbeitswinkel α eingestellt wird. Der Arbeitswinkel α lässt sich über den Gelenkarm 4 einstellen, da sich das das Verteilgestänge 2 um den zweiten Drehpunkt 6 verschwenken lässt. Über eine geeignete Einstellung des Arbeitswinkels α kann eine bedarfsgerechte Ausbringung des Verteilguts erreicht werden. So kann durch eine Veränderung des Arbeitswinkels α etwa auf unebenen Nutzflächen N oder bei Bergauf- bzw. Bergabfahrten senkrecht appliziert werden. Ferner kann der Arbeitswinkel α auf Erfordernisse des Verteilguts oder Umgebungsbedingungen, wie beispielsweise vorherrschende Windverhältnisse, eingestellt werden. Die Ausbringung des Verteilguts störende Umgebungsbedingungen lassen sich somit in gewissem Maße über die Einstellung des Arbeitswinkels α kompensieren. Bei einem in Fahrtrichtung R wehenden Wind kann es sich beispielsweise anbieten, durch einen gegenüber der Neutralstellung etwas größeren Arbeitswinkel α eine Windkompensation zu erreichen.

Die Einstellung des Arbeitswinkels α kann zu diskreten Zeitpunkten erfolgen, insbesondere einmalig vor dem Verteilen des Verteilguts. Andererseits kann eine Einstellung des Arbeitswinkels α auch mehrmalig oder sogar kontinuierlich während des Verteilen des Verteilguts erfolgen, um etwa auch wechselnde Umgebungsbedingungen wie Wind-, Steigungs- oder Bodenverhältnisse reagieren zu können.

Neben der Arbeitshöhe H und dem Arbeitswinkel α kann auch ein Arbeitsabstand A des Verteilgestänges 2 relativ zum Maschinenrahmen 3 über den Gelenkarm 4 eingestellt werden, vgl. Fig. 2 und Fig. 5. Je kleiner der Arbeitsabstand A ist, desto weniger weit ragt das Verteilgestänge V über das Ende des Maschinenrahmens 3 hinaus. Ein möglichst geringer Arbeitsabstand A ist wegen der damit einhergehenden reduzierten Stützlast in der Regel erwünscht. Schwingungs- und Vibrationseinflüsse lassen sich durch einen reduzierten Arbeitsabstand A oftmals verringern.

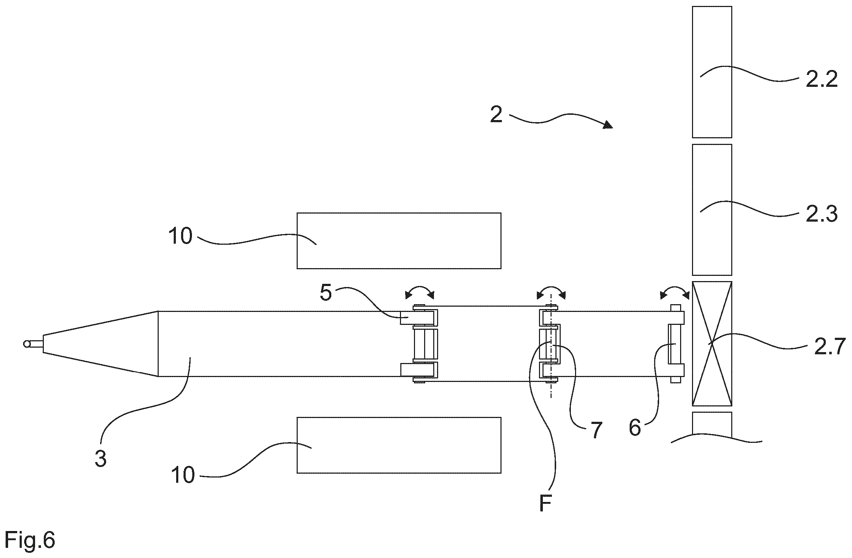

Die Einstellung des Arbeitsabstands A erfolgt über ein Falten des Gelenkarms 4 über dessen Faltgelenk 7. Das Faltgelenk 7 ist gemäß den Darstellungen in Fig. 5 und 6 mittig zwischen den beiden Drehpunkten 5, 6 angeordnet und erlaubt ein Knicken oder Falten des Gelenkarms 4. Bei einer gegebenen Arbeitshöhe H bewirkt ein Knicken oder Falten des Gelenkarm 4 über das Faltgelenk 7 eine Verringerung des Arbeitsabstands A. Ein maximaler Arbeitsabstand A lässt sich durch eine komplette Streckung des Gelenkarms 4 erreichen. Ein minimaler Arbeitsabstand A lässt sich entsprechend durch eine möglichst starke Faltung oder Knickung des Gelenkarms 4 erreichen.

Das Faltgelenk 7 verbindet zwei Segmente 4.1, 4.2 des Gelenkarms 4 miteinander, vgl. Fig. 1 und 2 sowie 5 und 6. Durch das Faltgelenk 7 verläuft eine Faltachse F quer zur Fahrtrichtung R. Die Faltachse F verläuft gemäß den Darstellungen in Fig. 5 und 6 parallel zu den beiden Drehachsen D1, D2. Die beiden Segmente 4.1, 4.2 sind in den Ausführungsbeispielen gemäß den Figuren 1, 2, 5 und 6 jeweils von gleicher axialer Länge, können jedoch auch unterschiedliche axiale Längen aufweisen. Ferner können die Segmente 4.1, 4.2 betreffend ihre Querschnittsformen identisch oder unterschiedlich ausgebildet sein. Mittels des Faltgelenks 7 wird auf vorteilhafte Art und Weise ein zusätzlicher Freiheitsgrad für die Bewegungen des Verteilgestänges 2 geschaffen.

Die Darstellung in Fig. 5 zeigt eine Ausführungsform des Gelenkarms 4, bei welcher die Segmente 4.1, 4.2 als Doppelprofile ausgebildet sind. Die jeweiligen Profile erstrecken sich in Fahrtrichtung R parallel zueinander und sind in den Drehpunkten 5, 6 sowie dem Faltgelenk 7 über quer zu den Segmenten 4.1, 4.2 verlaufende Bolzen miteinander verbunden. Die das zweite Segment 4.2 bildenden Profile sind im Faltgelenk 7 innenseitig mit den Profilen des ersten Segments 4.1 verbunden. Der Abstand zwischen den jeweiligen Profilen quer zur Fahrtrichtung R kann im Wesentlichen der Breite des Maschinenrahmens 3 entsprechen oder alternativ auch größer oder kleiner gewählt sein.

Die Darstellung in Fig. 6 zeigt eine alternative Ausführungsform des Gelenkarms 4, bei welcher die Segmente 4.1, 4.2 nicht als aus Profilen gebildet, sondern plattenartig ausgebildet sind. Es sind jedoch auch Ausführungen vorstellbar, bei welchen die Segmente 4.1, 4.2 des Gelenkarms 4 aus zwei einzelnen Profilen gebildet sind. Die Ausgestaltung des Gelenkarms 4, beispielsweise betreffend Anzahl und Querschnittsform der Profile, kann frei gewählt sein und insbesondere auf die Masse des Verteilgestänges 2 und die in der Verteilstellung V zu erwartenden Lasten sowie die bei der Verteilmaschine 1 vorliegenden Platzverhältnisse abgestimmt sein.

Den Darstellungen in Fig. 1 und 2 ist zu entnehmen, dass der Gelenkarm 4 derart ausgebildet und angeordnet ist, dass sich beim Falten ein Faltwinkel φ zwischen den Segmenten 4.1, 4.2 unterhalb des Faltgelenks 7 einstellt. Hierdurch wird eine gewisse Bodenfreiheit der Verteilmaschine 1 gegenüber der Nutzfläche N eingehalten. Der Faltwinkel φ wird beim Falten des Gelenkarms 4 kleiner. Eine vollständige Streckung des Gelenkarms 4 korrespondiert mit einem Faltwinkel φ von etwa 180 Grad, vgl. Fig. 3. Alternativ kann der Gelenkarm 4 auch derart ausgebildet und angeordnet sein, dass sich beim Falten ein Faltwinkel φ oberhalb des Faltgelenks 7 einstellt.

Über den Arbeitsabstand A des Verteilgestänges 2 relativ zum Maschinenrahmen 3 lässt sich eine Stützlast beeinflussen, welche zwischen dem Verteilgestänge 2 und dem Maschinenrahmen 3 wirkt. Je größer der Arbeitsabstand A gewählt ist, desto länger ist auch der Hebelarm zwischen Maschinenrahmen 3 und Verteilgestänge 2. Durch einen kürzeren Arbeitsabstand A können somit kürzere Hebelarme eingestellt werden, was entsprechend geringere auf den Maschinenrahmen 3 wirkende Lasten zur Folge hat. Außerdem kann über den Arbeitsabstand A auch eine Schwingungs- oder Vibrationsneigung des Verteilgestänges 2, welche etwa bei einer Überfahrt unebener Nutzflächen N gegeben sein kann, angepasst werden. In der Regel bewirkt ein geringerer Arbeitsabstand A eine geringere Schwingungsneigung und/oder geringere Vibrationsneigung und ist daher oftmals erwünscht.

Im Folgenden wird anhand der Darstellungen in Fig. 1 und 2 erläutert, auf welche Weise ein Falten oder Knicken des Gelenkarms 4 über das Faltgelenks 7 bewerkstelligt wird. Zu diesem Zweck ist ein Faltelement 8 vorgesehen, welches als längenveränderlicher Stellzylinder ausgebildet ist. Das zylindrische Faltelement 8 ist mit seinen beiden entgegengesetzten Enden an beiden Segmenten 4.1, 4.2 des Gelenkarms 4 so befestigt, dass es sich unterhalb des Faltgelenks 7 erstreckt. Eine Längenänderung des Faltelements 8 bewirkt somit eine Faltung oder Streckung des Gelenkarms 4. Gemäß der Anordnung des Faltelements 8 wie in Fig. 1 und 2 bewirkt eine Verkürzung des Faltelements 8 ein Knicken oder Falten des Gelenkarms 4, wohingegen eine Verlängerung des Faltelements 8 eine Streckung des Gelenkarms 4 bewirkt. Das Faltelement 8 ist an einer Unterseite des Gelenkarms 4 befestigt, es kann jedoch ebenso an einer Oberseite oder an einer anderen Seite des Gelenkarms 4 befestigt sein, wenn sich dies im jeweiligen Anwendungsfall als vorteilhaft herausstellt.

Das Faltelement 8 ist als hydraulischer Stellzylinder ausgebildet, welcher in einen Hydraulikkreislauf der Verteilmaschine 1 eingebunden ist. Alternativ kann das Faltelement 8 auch als anderweitiges Stellelement, beispielsweise als ein direkt am Faltgelenk 7 angeordneter Drehantrieb ausgebildet sein. Das Faltelement 8 kann automatisch betätigt werden und ist hierfür in eine Steuerung der Verteilmaschine 1 eingebunden. Die Betätigung des Faltelements 8 kann alternativ auch manuell erfolgen, beispielsweise über eine Eingabe in eine Bedieneinrichtung der Verteilmaschine 1, welche vom Bedienpersonal beispielsweise auch aus der Zugmaschine heraus bedient werden kann. Das Faltelement 8 kann auch der Begrenzung eines minimalen Faltwinkels φ dienen, wodurch sich etwa Kollisionen zwischen Verteilgestänge 2 und Maschinenrahmen 3 oder anderen Komponenten der Verteilmaschine 1 vermeiden lassen. Zu diesem Zweck können etwa Anschläge am Faltelement 8 ausgebildet sein, welche mit dem Gelenkarm 4 zur Begrenzung des Faltwinkels φ zusammenwirken können.

Neben dem Faltelement 8 ist mit dem Ausrichtelement 9 ein weiteres Stellelement an dem Gelenkarm 4 vorgesehen, vgl. Fig. 1 und 2. Das Ausrichtelement 9 erstreckt sich zwischen dem Gelenkarm 4 und dem Verteilgestänge 2. Über das Ausrichtelement 9 ist das Verteilgestänge 2 um den zweiten Drehpunkt 6 drehbar. Hierdurch lässt sich der Arbeitswinkel α des Verteilgestänges 2 einstellen. Ferner lässt sich über das Ausrichtelement 9 eine Ausrichtung des Verteilgestänges 2 unabhängig von der eingestellten Arbeitshöhe H beibehalten. Das Ausrichtelement 9 ist gemäß der Darstellung in Fig. 1 und 2 nicht auf derselben Seite wie das Faltelement 8 an dem Gelenkarm 4, sondern an einer Oberseite des Gelenkarms 4 angeordnet. Das Ausrichtelement 9 ist als Hydraulikzylinder ausgebildet, welcher in den Hydraulickreislauf der Verteilmaschine 1 eingebunden ist. Es kann zudem, ähnlich wie das Faltelement 8, in eine Steuerung der Arbeitsmaschine 1 eingebunden sein und auf vergleichbare Art und Weise manuell oder automatisch bedienbar sein.

Zusätzlich zu dem Faltelement 8 und dem Ausrichtelement 9 ist ein Stellelement 13 vorgesehen, mittels welchem der Gelenkarm 4 um den ersten Drehpunkt 5 drehbar ist. Wie dies zumindest teilweise in Fig. 1 und 2 erkennbar ist, erstreckt sich das Stellelement 13 zwischen dem Maschinenrahmen 3 und dem Gelenkarm 4. Das längenveränderliche Stellelement 13 ist an einer Unterseite des Gelenkarms 4 angeordnet, so dass eine axiale Verlängerung des Stellelements 13 gemäß der Darstellung in Fig. 1 und 2 eine Drehung des Gelenkarms 4 entgegen dem Uhrzeigersinn um den ersten Drehpunkt 5 bewirkt. Eine axiale Verkürzung des Stellelements 13 führt entsprechend zu einer Rotation des Gelenkarms 4 im Uhrzeigersinn um den Drehpunkt 5. Es sind jedoch auch alternative Anordnungen des Stellelements 13 denkbar, etwa an einer Oberseite des Gelenkarms 4. Das Stellelement 13 ist als Hydraulikzylinder ausgebildet, welcher in den Hydraulikkreislauf der Verteilmaschine 1 eingebunden ist. Es kann zudem, ähnlich wie das Faltelement 8 und das Ausrichtelement 9, in eine Steuerung der Verteilmaschine 1 eingebunden sein und/oder auf vergleichbare Art und Weise manuell oder automatisch bedienbar sein.

Gemäß der Darstellung in Fig. 4 kann der Gelenkarm 4 zwischen dem Faltgelenk 7 und dem zweiten Drehpunkt 6 längenveränderlich ausgebildet sein. Vorliegend ist das zweite Segment 4.2 des Gelenkarms 4 teleskopierbar, es könnte jedoch auch das erste Segment 4.1 teleskopierbar sein, oder auch beide Segmente 4.1, 4.2. Zur Änderung der axialen Länge des zweiten Segments 4.2 ist ein Stellelement 15 vorgesehen, welches als Hydraulikzylinder ausgeführt ist. Es kann in einen Hydraulikkreislauf und/oder eine Steuerung der Verteilmaschine 1 eingebunden sein. Die Bedienung des Stellelements 15 kann manuell oder automatisch erfolgen. Durch die Möglichkeit der Längenveränderung des Gelenkarms 4 ist eine weitere Einstellmöglichkeit, insbesondere zur Einstellung der Arbeitshöhe H und/oder einer Gesamthöhe G der Verteilmaschine 1, geschaffen.

Eine zusätzliche Möglichkeit zur Anpassung der Gesamthöhe G der Verteilmaschine 1 kann dadurch geschaffen werden, dass der Maschinenrahmen 3 unabhängig von dem Verteilgestänge 2 höhenverstellbar ist. Über geeignete Stellelemente kann der Maschinenrahmen 3 relativ zu der Nutzfläche N angehoben werden, etwa um eine größere Bodenfreiheit zu erreichen, wodurch Beschädigungen von Nutzpflanzen bei der Überfahrt mit der Verteilmaschine 1 vermieden werden können. Andererseits kann sich eine abgesenkte Position des Maschinenrahmens 3 im Hinblick auf eine günstige und insbesondere für die Straßenfahrt sichere Schwerpunktlage der Verteilmaschine 1 als vorteilhaft erweisen.

In diesem Zusammenhang kann insbesondere der Maschinenrahmen 3 über einen Stellzylinder gegenüber den Laufrädern 10 teleskopierbar ausgebildet sein. Unter Nutzung geeigneter Radaufhängungen kann der Maschinenrahmen 3 durch eine axiale Verlängerung der Stellzylinder gegenüber den Laufrädern 10 angehoben und/oder durch eine axiale Verkürzung der Stellzylinder gegenüber den Laufrädern 10 abgesenkt werden. Alternativ oder ergänzend zu hydraulischen Stellzylindern können auch mechanische, pneumatische oder elektrische Stellelemente zur Höhenverstellung des Maschinenrahmens 3 zum Einsatz kommen.

Es kann eine gemeinsame Steuerung vorgesehen sein, über welche sich die Gesamthöhe G der Verteilmaschine 1 einstellen lässt. Als Gesamthöhe G wird der Abstand zwischen dem Boden der Nutzfläche N und dem höchsten Punkt der Verteilmaschine 1 verstanden, vgl. Fig. 3. In einer Transportstellung T des Verteilgestänges 2 befindet sich der höchste Punkt der Verteilmaschine 1 in der Regel an dem Verteilgestänge 2, vgl. Fig. 3. In einer Verteilstellung V befindet sich der höchste Punkt der Verteilmaschine 1 in der Regel an dem Gelenkarm 4, vgl. Fig. 1 und 2, oder an einem Vorratsbehälter 14. Über die gemeinsame Steuerung der Gesamthöhe G kann beispielsweise ein Sollwert für die Gesamthöhe G vorgegeben werden. Zur Erreichung des Sollwerts der Gesamthöhe G können die Höhenverstellung des Maschinenrahmens 3 und die Höhenverstellung des Verteilgestänges 2 angesteuert werden. Um eine sichere Straßenlage insbesondere bei gefülltem Vorratsbehälter 14 zu erreichen kann es sich beispielsweise anbieten, in der Transportstellung T des Verteilgestänges 2 den Maschinenrahmen 3 auf eine niedrige Höhe einzustellen. Bei der Überwindung von Hindernissen oder bei einer Überfahrt einer Nutzfläche N mit einem in Transportstellung T befindlichen Verteilgestänge 2 kann es sich zur Schonung des Pflanzenbestands anbieten, den Maschinenrahmen 3 auf eine größere Höhe einzustellen.

Wie dies der Darstellung gemäß Fig. 3 entnommen werden kann, kann die Verteilmaschine 1 eine höhenverstellbare Deichsel 11 zur Anbindung an eine Zugmaschine aufweisen. Die Deichsel 11 ist über ein Drehgelenk zur Höhenverstellung schwenkbar an dem Maschinenrahmen 3 angeordnet. Auf diese Weise kann ein an dem vorderen Ende der Deichsel 11 angeordneter Kupplungspunkt auf die Höhe eines korrespondierenden zugmaschinenseitigen Kupplungspunkts angepasst werden. Die Schwenkbewegungen der Deichsel 11 relativ zu dem Maschinenrahmen 3 können manuell oder mittels eines Aktors, etwa eines Stellzylinders oder eines Drehmotors, bewirkt werden.

Über die Höhenverstellung der Deichsel 11 kann die gezogene Verteilmaschine 1 auf einfache und sichere Art und Weise mit der Zugmaschine verbunden bleiben, auch wenn die Höhe des Maschinenrahmens 3 verändert wird. Da der zugmaschinenseitige Kupplungspunkt in der Regel allein von der Zugmaschine abhängt und unabhängig von der Höhe des Maschinenahmens 3 ist, wird bei einer Höhenverstellung des Maschinenrahmens 3 ein Verschwenken der Deichsel 11 gegenüber dem Maschinenrahmen 3 benötigt. Eine Steuerung der Schwenkbewegungen der Deichsel 11 kann bevorzugt in die Steuerung der Gesamthöhe G der Verteilmaschine 1 eingebunden sein.

Im Folgenden wird vorwiegend anhand der Darstellungen in Fig. 7a bis d erläutert, wie das Verteilgestänge 2 zwischen der ausgeklappten Verteilstellung V und der eingeklappten Transportstellung T verstellt werden kann. Die Darstellung in Fig. 7a zeigt das Verteilgestänge 2 in einer ausgeklappten Verteilstellung V und die Darstellung gemäß Fig. 7d zeigt das Verteilgestänge 2 in einer eingeklappten Transportstellung T, wobei die Darstellungen gemäß Fig. 7b und c Zwischenstellungen zeigen.

In der ausgeklappten Verteilstellung V gemäß Fig. 7a sind sämtliche Verteilsegmente 2.1 bis 2.7 quer zur Fahrtrichtung R nebeneinander angeordnet. Es ergibt sich eine Spannweite S quer zur Fahrtrichtung R. Von den Verteilsegmenten 2.1 bis 2.7 ist das Verteilsegment 2.7 ortsfest am Maschinenrahmen 3 angeordnet. In der Regel erstreckt sich dieses Verteilsegment 2.7 über zumindest einen Teil der Breite des Maschinenrahmens 3, vgl. auch die Darstellungen gemäß Fig. 5 und 6. Wie dies der Darstellung gemäß Fig. 5 entnommen werden kann, überschreitet das Verteilsegment 2.7 jedoch nicht den Abstand, welcher durch die Distanz zwischen den beiden Laufrädern 10 vorgegeben ist.

Das Verteilsegment 2.7 ist in der Regel auch dasjenige Verteilsegment, welches über den zweiten Drehpunkt 6 mit dem Gelenkarm 4 verbunden ist und somit zur Einstellung des Arbeitswinkels α rotiert werdenkann. Die Verteilsegmente 2.1 bis 2.3 erstrecken sich in Fahrtrichtung R rechts von dem Verteilsegment 2.7 und die Verteilsegmente 2.4 bis 2.6 erstrecken sich in Fahrtrichtung R links von dem Verteilsegment 2.7.

Im Unterschied zu dem Verteilsegment 2.7 sind die Verteilsegmente 2.1 bis 2.6 gegeneinander klappbar ausgebildet. Zwischen benachbarten Verteilsegmenten 2.1 bis 2.6 sind jeweils in den Figuren nicht dargestellte, geeignete Drehgelenke vorgesehen, die jeweils ein Klappen um eine im Wesentlichen senkrecht verlaufende Klappachse ermöglichen. Um von der ausgeklappten Verteilstellung V gemäß Fig. 7a in die eingeklappte Transportstellung T gemäß Fig. 7d zu gelangen, sind mehrere Klappvorgänge erforderlich. Zunächst werden die außen angeordneten Verteilsegmente 2.1 und 2.6 gegenüber den jeweils benachbarten Verteilsegmenten 2.2 und 2.5 um 180 Grad geklappt, vgl. Fig. 7b. Die Pfeildarstellung in Fig. 7b verdeutlicht, dass das auf der linken Seite der Verteilmaschine 1 angeordnete Verteilsegment 2.6 im Uhrzeigersinn verschwenkt wird, bis es an einer Vorderseite des benachbarten Verteilsegments 2.5 zur Anlage kommt. Das auf der rechten Seite der Verteilmaschine 1 angeordnete Verteilsegment 2.1 wird entsprechend entgegen dem Uhrzeigersinn verschwenkt, bis es an einer Vorderseite des benachbarten Verteilsegments 2.2 anliegt.

Anschließend oder zeitgleich werden die Verteilsegmente 2.5 und 2.6 gemeinsam entgegen dem Uhrzeigersinn gegenüber dem benachbarten Segment 2.4 um 180 Grad geklappt, vgl. Fig. 7c. Die Verteilsegmente 2.1 und 2.2 vollführen eine spiegelbildliche Klappbewegung um ebenfalls 180 Grad. Abschließend oder ebenfalls zeitgleich werden die drei Verteilsegmente 2.4, 2.5 und 2.6 gemeinsam im Uhrzeigersinn um 90 Grad geklappt, so dass diese sich mit ihrer Längsachse in Fahrtrichtung R erstrecken, vgl. Fig. 7d und Fig. 3. Die drei Verteilsegmente 2.1, 2.2 und 2.3 führen eine gespiegelte Klappbewegung aus. In der Transportstellung T gemäß Fig. 7d sind die Verteilsegmente 2.1 bis 2.6 zieharmonikaartig geklappt oder gefaltet und erstrecken sich beidseitig des zentralen Verteilsegments 2.7.

Um aus der eingeklappten Transportstellung T gemäß Fig. 7d in die ausgeklappte Verteilstellung V gemäß Fig. 7a zu gelangen, wird der umgekehrte Bewegungsablauf entsprechend den Darstellungen ausgehend von Fig. 7d über Fig. 7c und 7b bis hin zu Fig. 7a ausgeführt. Die Klappbewegungen der Verteilsegmente 2.1 bis 2.6 können manuell oder automatisch, etwa über elektrische, hydraulische oder pneumatische Stellelemente, erfolgen. Die Steuerung der Klappbewegungen kann dabei bevorzugt in die Maschinensteuerung der Verteilmaschine 1 eingebunden sein.

Die Darstellung in Fig. 7a zeigt eine Verteilstellung V des Verteilgestänges 2, bei welcher die Verteilsegmente 2.1 bis 2.6 in einer symmetrischen Anordnung in Bezug auf eine Maschinenlängsachse, welche sich in Fahrtrichtung R erstreckt, angeordnet sind. Hierdurch lässt sich ein maximal breiter Streifen der Nutzfläche N bei einer einzigen Überfahrt mit Verteilgut versorgen. Es kann jedoch auch eine asymmetrische Anordnung des Verteilgestänges 2 gewünscht oder bedarfsweise erforderlich sein, etwa an den Rändern der Nutzfläche N oder in der Nähe von auf der Nutzfläche N befindlichen Hindernissen. Hierfür kann das Verteilgestänge 2 nur einseitig zieharmonikaartig eingeklappt werden. Ferner muss das Verteilgestänge 2 nicht immer vollständig in die Verteilstellung V gemäß Fig. 7a geklappt werden, es kann bedarfsweise auch vorteilhaft sein, das Verteilgut in einer Zwischenstellung des Verteilgestänges 2 gemäß Fig. 7b oder c zu verteilen, wodurch sich die Spannweite S entsprechend reduzieren lässt.

Neben dem zieharmonikaartigen Klappen der Verteilsegmente 2.1 bis 2.6 quer zur Fahrtrichtung R kann mit der Verstellung zwischen der Verteilstellung V und der Transportstellung T auch eine Höhenverstellung des Verteilgestänges 2 verbunden sein, vgl. die Darstellungen gemäß Fig. 3 und 4. Da das Verteilgestänge 2 auch in dessen eingeklappter Transportstellung T eine gewisse Breite quer zur Fahrtrichtung R aufweist, würde die Verteilmaschine 1 zulässige Transportbreiten gegebenenfalls nicht einhalten können, wenn das Verteilgestänge 2 in der Arbeitshöhe H verbleiben würde. Aus diesem Grund wird das Verteilgestänge 2 vor oder während der Klappbewegungen der Verteilsegmente 2.1 bis 2.6 in eine erhöhte Position entsprechend einer Transporthöhe angehoben, was etwa aus dem Vergleich der Darstellungen gemäß Fig. 2 und 3 ersichtlich ist.

Ausgehend von der ausgeklappten Verteilstellung V gemäß Fig. 2, in welcher das Verteilgestänge 2 in der Arbeitshöhe H angeordnet ist, wird das gesamte Verteilgestänge 2 für die Transportstellung T in eine Transporthöhe angehoben. Hierfür wird eines der Segmente 4.2 des Gelenkarms 4 mittels des Faltelements 8 entgegen dem Uhrzeigersinn um das Faltgelenk 7 rotiert, vgl. Fig. 3. In der Transportstellung T gemäß Fig. 3 beträgt der Faltwinkel ϕ zwischen den beiden Segmenten 4.1 und 4.2 des Gelenkarms 4 annähernd 180 Grad, so dass sich beide Segmente 4.1, 4.2 im Wesentlichen entlang einer Linie erstrecken. In der angehobenen Transportstellung T kann das zieharmonikaartig zusammengeklappte Verteilgestänge 2 zumindest teilweise oberhalb von Komponenten der Verteilmaschine 1, wie etwa den Laufrädern 10 oder dem Vorratsbehälter 14, angeordnet sein. Hierdurch lässt sich unter Inkaufnahme einer vergrößerten Gesamthöhe G eine zulässige Gesamtbreite der Verteilmaschine 1 zuverlässig einhalten. Bevorzugt überschreitet die Gesamtbreite der Verteilmaschine 1 in der Transportstellung T des Verteilgestänges 2 nicht die Breite der Zugmaschine.

Unter Umständen kann jedoch ein weiteres Anheben des Verteilgestänges 2 in eine weiter erhöhte Transporthöhe erforderlich sein, etwa bei besonders großvolumigen oder zusätzlichen Vorratsbehältern 14, vgl. Fig. 4. Um das Verteilgestänge 2 in dessen Transportstellung T beispielsweise oberhalb solcher zusätzlichen Vorratsbehälter 14 anordnen zu können, kann das zweite Segment 4.2 teleskopierbar sein, so wie dies in Fig. 4 dargestellt ist. Eine entsprechend winklige Anordnung des Gelenkarms 4 gegenüber der Nutzfläche N vorausgesetzt, führt ein Teleskopieren des zweiten Segments 4.2 zu einem weiteren Anheben des Verteilgestänges 2 oberhalb der Vorratsbehälter 14.

Je nach axialer Länge der Verteilsegmente 2.1 bis 2.6 kann es auch sinnvoll sein, das Verteilgestänge 2 für die Transportstellung T entgegen der Fahrtrichtung R nach hinten zu verlagern. Auch dies kann etwa durch ein Teleskopieren eines Segments 4.2 des Gelenkarms 4 oder durch eine Drehstellung des Gelenkarms 4 um den ersten Drehpunkt 5 oder eine Drehstellung des Segments 4.2 um das Faltgelenk 7 erreicht werden. Wenn das Verteilgestänge 2 in dessen Verteilstellung V vergleichsweise weit hinten angeordnet ist, kann ein Raum vor dem Verteilgestänge 2 in vorteilhafter Weise für andere Komponenten der gezogenen Verteilmaschine 1 oder für einen unbehinderten Bewegungsbereich der Zugmaschine genutzt werden. Der Gelenkarm 4 ermöglicht die Verwendung vergleichsweise großer Verteilsegmente 2.1 bis 2.6 auch an Verteilmaschinen 1 mit eher kurzen Maschinenrahmen 3, da das Verteilgestänge 2 in dessen Transportstellung T nach hinten verlagerbar ist.

Die vorstehend beschriebene gezogene Verteilmaschine 1 zeichnet sich dadurch aus, dass der Abstand zwischen dem Maschinenrahmen 3 und dem Verteilgestänge 2 unabhängig von der vertikalen Höhe des Verteilgestänges 2 eingestellt werden kann.

Es sei hierbei explizit erwähnt, dass die zuvor beschriebene Verteilmaschine 1 alternativ oder zusätzlich als pneumatischer Düngerstreuer zum Verteilen von streugutartigem Verteilgut, insbesondere Streumittel, ausgebildet sein kann. Die zuvor beschriebenen Merkmale und/oder Ausführungsbeispiele können dabei einzeln oder in Kombination an einer derartigen Verteilmaschine 1 ausgebildet sein.

### Bezugszeichen:

- 1: Verteilmaschine
- 2: Verteilgestänge
- 2.1: Verteilsegment
- 2.2: Verteilsegment
- 2.3: Verteilsegment
- 2.4: Verteilsegment
- 2.5: Verteilsegment
- 2.6: Verteilsegment
- 2.7: Verteilsegment
- 3: Maschinenrahmen
- 4: Gelenkarm
- 4.1: Segment
- 4.2: Segment
- 5: Drehpunkt
- 6: Drehpunkt
- 7: Faltgelenk
- 8: Faltelement
- 9: Ausrichtelement
- 10: Laufrad
- 11: Deichsel
- 12: Stellelement
- 13: Stellelement
- 14: Vorratsbehälter

- A: Arbeitsabstand
- D1: Drehachse
- D2: Drehachse
- F: Faltachse
- G: Gesamthöhe
- H: Arbeitshöhe
- N: Nutzfläche
- R: Fahrtrichtung
- S: Spannweite
- T: Transportstellung
- V: Verteilstellung

- α: Arbeitswinkel
- φ: Faltwinkel

## Patentansprüche

1. Gezogene Verteilmaschine, insbesondere Feldspritze, zum Verteilen von Verteilgut auf einer landwirtschaftlichen Nutzfläche (N), mit einem Verteilgestänge (2), welches über einen Gelenkarm (4) gegenüber einem fahrbaren Maschinenrahmen (3) bewegbar ist, wobei der Gelenkarm (4) über einen ersten Drehpunkt (5) drehbar am Maschinenrahmen (3) und über einen zweiten Drehpunkt (6) drehbar am Verteilgestänge (2) angeordnet ist,
**dadurch gekennzeichnet,**
**dass** der Gelenkarm (4) über ein zwischen den beiden Drehpunkten (5, 6) angeordnetes Faltgelenk (7) faltbar ist.

2. Verteilmaschine nach Anspruch 1, **dadurch gekennzeichnet, dass** eine Arbeitshöhe (H) des Verteilgestänges (2) über den Gelenkarm (4) einstellbar ist.

3. Verteilmaschine nach Anspruch 2, **dadurch gekennzeichnet, dass** eine Ausrichtung des Verteilgestänges (2) relativ zum Maschinenrahmen (3), insbesondere eine Ausrichtung in vertikaler Richtung, unabhängig von der eingestellten Arbeitshöhe (H) ist.

4. Verteilmaschine nach einem der Ansprüche 1 bis 3, **dadurch gekennzeichnet, dass** ein Arbeitsabstand (A) des Verteilgestänges (2) relativ zum Maschinenrahmen (3) über den Gelenkarm (4) einstellbar ist.

5. Verteilmaschine nach Anspruch 4, **dadurch gekennzeichnet, dass** eine Ausrichtung des Verteilgestänges (2) relativ zum Maschinenrahmen (3), insbesondere eine Ausrichtung in vertikaler Richtung, unabhängig von dem eingestellten Arbeitsabstand (A) ist.

6. Verteilmaschine nach einem der vorhergehenden Ansprüche, **dadurch gekennzeichnet, dass** das Verteilgestänge (2) über den Gelenkarm (4) zwischen einer eingeklappten Transportstellung (T) und einer ausgeklappten Verteilstellung (V) klappbar ist.

7. Verteilmaschine nach Anspruch 6, **dadurch gekennzeichnet, dass** eine Transporthöhe des Verteilgestänges (2) in dessen Transportstellung (T) über den Gelenkarm (4) einstellbar ist.

8. Verteilmaschine nach einem der vorhergehenden Ansprüche, **dadurch gekennzeichnet, dass** ein Arbeitswinkel (α) des Verteilgestänges (2), insbesondere in dessen Verteilstellung (V), über den Gelenkarm (4) einstellbar ist.

9. Verteilmaschine nach einem der vorhergehenden Ansprüche, **dadurch gekennzeichnet, dass** der Gelenkarm (4) mittels eines Faltelements (8) über das Faltgelenk (7) faltbar ist.

10. Verteilmaschine nach Anspruch 9, **dadurch gekennzeichnet, dass** das Faltelement (8) längenveränderlich ist, wobei eine Verkürzung des Faltelements (8) ein Falten des Gelenkarms (4) und eine Verlängerung des Faltelements (8) ein Strecken des Gelenkarms (4) bewirkt.

11. Verteilmaschine nach einem der vorhergehenden Ansprüche, **dadurch gekennzeichnet, dass** das Verteilgestänge (2) mittels eines Ausrichtelements (9) um den zweiten Drehpunkt (6) drehbar ist.

12. Verteilmaschine nach einem der Ansprüche 9 bis 11, **dadurch gekennzeichnet, dass** das Faltelement (8) und/oder das Ausrichtelement (9) als Stellzylinder, insbesondere als Hydraulikzylinder ausgebildet sind.

13. Verteilmaschine nach einem der vorhergehenden Ansprüche, **dadurch gekennzeichnet, dass** der Gelenkarm (4) mindestens zwei über das Faltgelenk (7) relativ zueinander faltbare Segmente (4.1, 4.2) aufweist.

14. Verteilmaschine nach einem der vorhergehenden Ansprüche, **dadurch gekennzeichnet, dass** der Gelenkarm (4) zwischen dem Faltgelenk (7) und mindestens einem der Drehpunkte (5, 6) längenveränderlich, insbesondere teleskopierbar, ist.
